# FASCICULE DE BREVET EUROPEEN

(11) **EP 2 246 217 B1**
(45) Date de publication et mention de la délivrance du brevet: **06.03.2013**
(21) Numéro de dépôt: 10160410.6
(22) Date de dépôt: 20.04.2010
(51) Int. Cl.: B60N 2/48

(54) **Dispositif de rangement d'un gilet de sécurité dans l'appui-tête d'un dossier de siège de véhicule**
Vorrichtung zum Verstauen einer Sicherheitsweste in der Kopfstütze einer Fahrzeugsitzrückenlehne
Device for storing a safety vest in the headrest of a vehicle seat back

(30) Priorité: 30.04.2009 FR 0952866
(43) Date de publication de la demande: 03.11.2010
(73) Titulaire: Peugeot Citroën Automobiles SA, 78140 Vélizy-Villacoublay (FR)
(72) Inventeur: Le Camus, Cédric, 78310, Maurepas (FR); Vanin, Nicolas, 78280, Guyancourt (FR)

(56) Documents cités:
- US-A- 3 863 283
- US-A- 4 247 961
- US-B1- 7 089 617

## Description

La présente invention concerne un dispositif de rangement d'un gilet de sécurité dans l'appui-tête d'un dossier de siège de véhicule, tel qu'un véhicule automobile.

De nouvelles dispositions légales adoptées dans certains pays obligent les utilisateurs de véhicules automobiles à posséder un gilet de sécurité qui doit être gardé dans l'habitacle du véhicule à un emplacement facile d'accès afin de permettre à un utilisateur, dans une situation d'urgence, d'enfiler le gilet de sécurité avant de quitter son véhicule.

Souvent, les gilets de sécurité sont disposés autour du dossier d'un siège du véhicule, notamment le siège du passager avant, mais une telle disposition est peu esthétique et peut s'avérer dangereuse si le dossier est équipé d'un sac gonflable.

De tels gilets sont également rangés à d'autres endroits faciles d'accès dans l'habitacle du véhicule, tels que par exemple la boîte à gants du véhicule. Cependant, de tels endroits de rangement sont peu pratiques du fait qu'ils sont facilement encombrés par le gilet de sécurité.

Pour résoudre les problèmes ci-dessus, on a cherché à développer une solution en logeant un gilet de sécurité dans l'appui-tête d'un dossier de siège de véhicule automobile.

Une telle solution est décrite par exemple dans le brevet US 3 437 374. Selon cette solution connue, l'appui-tête du dossier du siège est constitué de deux parties sensiblement semi-cylindriques montées pivotantes l'une par rapport à l'autre suivant un axe supérieur longitudinal de l'appui-tête, l'une de ces parties étant creuse et apte à recevoir un gilet de sécurité tandis que l'autre partie rembourrée constitue le coussin d'appui-tête. L'une ou l'autre de ces deux parties d'appui-tête peut pivoter autour de l'axe d'articulation à une position debout d'ouverture de l'autre partie d'appui-tête afin d'accéder au gilet de sécurité logé dans cette autre partie.

Cependant, un tel dispositif de rangement de gilet de sécurité nécessite la réalisation d'un appui-tête particulier d'une structure complexe et coûteuse.

On connaît également du document US3863283 un dispositif de rangement d'un gilet de sécurité, conforme au préambule de la revendication 1, mais ne comprenant pas de moyen de préhension pour extraire facilement le gilet de son logement.

La présente invention a pour but de palier les inconvénients ci-dessus des dispositifs de rangement connus de gilet de sécurité dans l'habitacle d'un véhicule automobile.

A cet effet, l'invention propose un dispositif de rangement conforme à l'objet de la partie caractérisante de la revendication 1.

De préférence, le logement du coussin de l'appui-tête est conformé pour permettre le rangement plié à plat du gilet de sécurité dans l'appui-tête.

Avantageusement, l'ouverture du coussin de l'appui-tête est en forme générale de fente.

Selon une caractéristique avantageuse, le gilet de sécurité est accolé à une plaque rigide facilitant l'introduction du gilet de sécurité dans le logement du coussin de l'appui-tête au travers de l'ouverture de ce coussin et pouvant être séparée du gilet de sécurité lorsque ce dernier est extrait de l'appui-tête.

Selon une variante de réalisation, le moyen de préhension est solidaire du gilet de sécurité.

Selon une autre variante de réalisation, le moyen de préhension est solidaire de la plaque rigide.

Avantageusement, le gilet de sécurité est repliable à plat en poche ou est logé à plat dans une pochette.

Avantageusement, l'ouverture est réalisée à une extrémité inférieure du coussin située entre la face avant d'appui-tête et la face arrière du coussin.

L'invention vise également un appui-tête pour dossier de siège de véhicule, tel qu'un véhicule automobile, et qui est caractérisé en ce qu'il comprend un logement formé dans le rembourrage du coussin de l'appui-tête et une ouverture du coussin permettant l'introduction d'un gilet de sécurité pour le ranger dans ce logement.

L'invention vise enfin un véhicule, tel qu'un véhicule automobile, caractérisé en ce qu'il comprend un ou plusieurs sièges dont chaque dossier est équipé d'un appui-tête conforme à l'appui-tête précédemment décrit.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue partielle en perspective d'un dossier de siège d'un véhicule à appui-tête de rangement d'un gilet de sécurité conforme l'invention ;
- la figure 2 est une vue en perspective semblable à celle de la figure 1 et représentant l'extraction du gilet de sécurité de l'appui-tête de l'invention ;
- la figure 3 est une vue en perspective de l'appui-tête montrant par transparence le logement de réception d'un gilet de sécurité suivant une variante de réalisation de l'invention ;
- la figure 4 représente l'appui-tête de la figure 3 en vue de dessous ;
- la figure 5 est une vue en perspective de l'appui-tête de la figure 4 équipant un dossier de siège ; et
- la figure 6 est une vue en perspective de l'appui-tête de l'invention dans lequel est réinséré un gilet de sécurité.

En se reportant aux figures, la référence 1 désigne un dossier de siège d'un véhicule automobile portant à sa partie supérieure un appui-tête 2 comportant un coussin 3 et une armature 4 logée dans le coussin 3, l'armature 4 comportant deux tiges cylindriques parallèles 5 faisant saillie du coussin 3 et pouvant coulisser dans la partie supérieure du dossier 1 afin de permettre un réglage en hauteur du coussin d'appui-tête 3 relativement au dossier 1.

Le coussin 3 comporte une housse externe 6 contenant une garniture interne de rembourrage 7, par exemple en matériau mousse, dans laquelle est noyée une partie de l'armature 4 de l'appui-tête 2.

L'appui-tête 2 est conformé de façon à loger amoviblement dans celui-ci un gilet de sécurité 8.

Selon l'invention, le coussin 3 de l'appui-tête 2 comporte un logement ou une cavité 9 formé dans le rembourrage interne 7 du coussin 3 et apte à recevoir le gilet de sécurité 8.

Le coussin 3 comprend en outre une ouverture 10 en forme générale de fente réalisée au travers de la housse 6 du coussin 3 à son extrémité inférieure destinée à venir en regard de la partie supérieure du dossier 1 et définie entre la face avant d'appui-tête et la face arrière de la housse 6 du coussin 3.

L'ouverture 10 du coussin 3 communique avec le logement interne 9 de ce coussin et permet l'extraction manuelle du gilet de sécurité 8 rangé dans le logement 9 et l'introduction de ce gilet dans le logement 9 pour le ranger dans le coussin 3 de l'appui-tête 2.

De préférence, le logement 9 du coussin d'appui-tête 2 est conformé pour permettre le rangement plié à plat du gilet de sécurité 8 dans le coussin 3. Le rembourrage en matériau mousse dans lequel est défini le logement 9 peut assurer le maintien du gilet de sécurité 8 repliable dans le logement en enserrant élastiquement le gilet de part et d'autre de celui-ci.

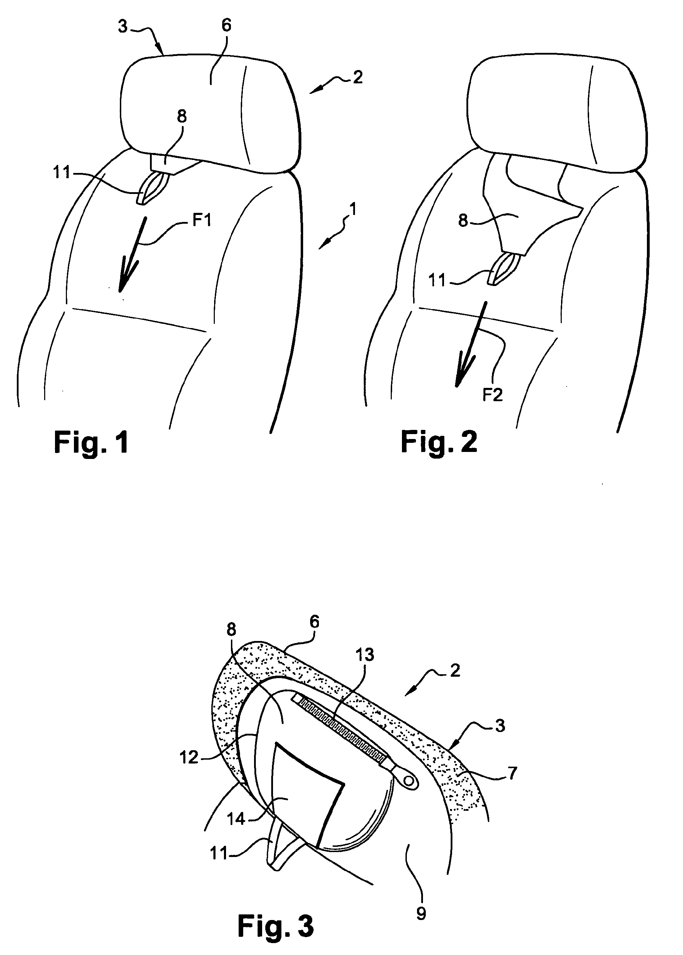

Selon la variante de réalisation représentée aux figures 1 et 2, le gilet de sécurité 8 est pourvu d'une languette ou poignée de préhension 11 faisant saillie au travers de l'ouverture 10 à l'extérieur du coussin 3 de l'appui-tête 2 en position de rangement du gilet de sécurité 8 dans le logement 9 de ce coussin. Comme le montre la figure 1, la languette ou poignée de préhension 11, à la position rangée du gilet de sécurité 8 dans le coussin 3, peut reposer sur la face avant d'appui du dossier 1.

Dans une situation d'urgence nécessitant le port du gilet de sécurité 8, il suffit d'exercer sur la languette ou poignée de préhension 11 un effort de traction permettant d'extraire le gilet de sécurité 8 du logement 9 du coussin d'appui-tête 2 comme indiqué par les flèches F1 et F2 aux figures 1 et 2.

Après utilisation du gilet de sécurité 8, celui-ci, après avoir été replié à plat, peut être introduit au travers de l'ouverture 10 dans le logement 9 du coussin d'appui-tête 2 pour être à nouveau rangé dans ce dernier. A cet égard, l'utilisateur maintien à plat le gilet de sécurité 8 en l'introduisant dans la garniture interne du rembourrage en matériau mousse 7 dans laquelle est défini le logement 9. Bien entendu, l'ouverture 10 est dimensionnée pour faciliter l'extraction du gilet de sécurité 8 du logement 9 du coussin 3 ou l'introduction de ce gilet dans le logement 9 de ce coussin.

Avantageusement, le gilet de sécurité peut être du type permettant son repliage en poche, facilitant ainsi davantage l'introduction du gilet à sa position rangée dans le coussin 3 de l'appui-tête 2.

Selon la variante de réalisation représentée aux figures 3 à 5, le gilet de sécurité 8 peut être logé à plat dans une pochette, par exemple en matière plastique transparente 12, qui peut alors comporter la languette ou poignée de préhension 11 en forme d'anse reposant en partie supérieure du dossier 1 lorsque l'appui-tête 2 est fixé à ce dossier. La poche 12 peut être pourvue d'une fermeture du genre fermeture éclair ou à boutons-pression permettant d'accéder au gilet de sécurité 8 une fois celui-ci retiré du coussin d'appui-tête 2.

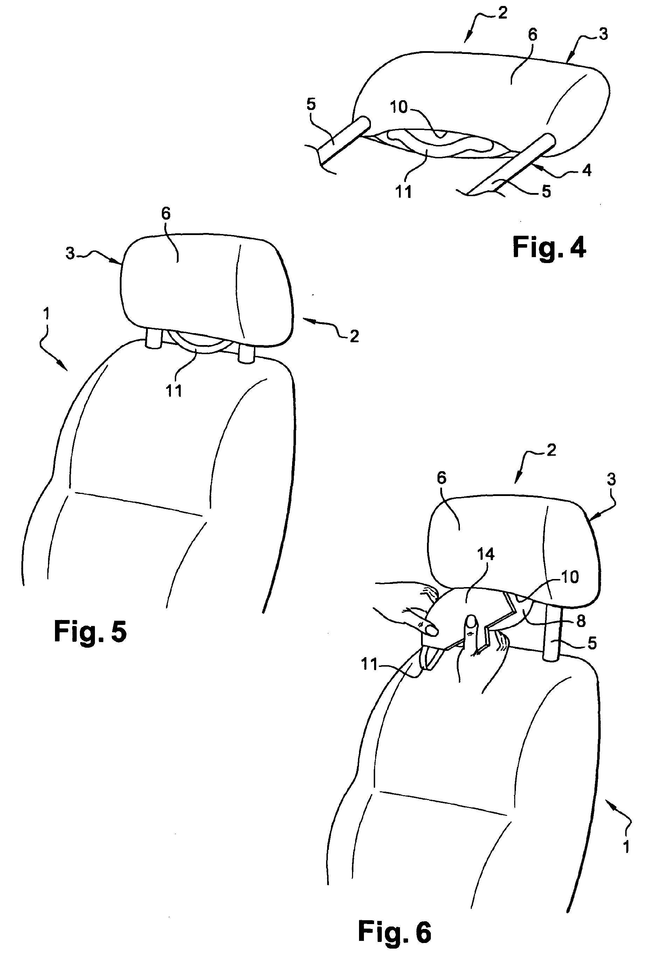

Afin de faciliter l'introduction du gilet de sécurité 8 dans le coussin d'appui-tête 2 au travers de l'ouverture 10, le gilet peut être accolé à une plaque rigide 14 représentée aux figures 3 et 6 et pouvant être réalisée en une matière plastique. La plaque 14 est amoviblement fixée sur le gilet de sécurité 8 replié à plat ou sur la poche 12 contenant ce gilet replié à plat par tout moyen approprié afin de séparer la plaque 14 du gilet 8 ou de la poche 12 une fois cet ensemble extrait du coussin d'appui-tête 2. Les moyens fixant amoviblement la plaque 14 au gilet de sécurité 8 ou à sa pochette de rangement 12 peuvent être constitués par une ou plusieurs bandes du genre Velcro ou par des bandes d'adhésif autocollant réutilisable.

La figure 6 montre en outre que la plaque rigide 14 peut être pourvue de la languette ou poignée de préhension 11.

L'appui-tête de l'invention permettant le rangement d'un gilet de sécurité peut être utilisé sur un ou plusieurs dossiers de sièges d'un véhicule automobile qu'ils soient individuels ou sous forme de banquette.

Le dispositif de l'invention permet donc un rangement simple et facile d'accès d'un gilet de sécurité dans l'appui-tête d'un siège d'un véhicule automobile.

## Revendications

1. Appui-tête (2) d'un dossier (1) de siège de véhicule, tel qu'un véhicule automobile comprenant un dispositif de rangement d'un gilet de sécurité ledit appui-tête (2) comprenant un coussin (3) comportant une ouverture (10) au travers de laquelle peut être extrait manuellement le gilet de sécurité (8) rangé dans un logement (9) formé dans le rembourrage (7) du coussin (3) de l'appui-tête (2) et dans lequel peut être introduit le gilet de sécurité (8) pour le ranger dans le logement (9) du coussin (3) de l'appui-tête (2), **caractérisé en ce que** le dispositif de rangement comporte un moyen de préhension (11), tel qu'une poignée ou une languette, faisant saillie de l'ouverture (10) du coussin (3) de l'appui-tête (2), ledit moyen de préhension permettant d'extraire le gilet de sécurité (8) du logement (9) de l'appui-tête (2) quand on exerce une traction sur le moyen de préhension.

2. Appui-tête selon la revendication 1, **caractérisé en ce que** le logement (9) du coussin (3) de l'appui-tête (2) est conformé pour permettre le rangement plié à plat du gilet de sécurité (8) dans l'appui-tête (2).

3. Appui-tête selon les revendications 1 ou 2, **caractérisé en ce que** l'ouverture (10) du coussin (3) de l'appui-tête (2) est en forme générale de fente.

4. Appui-tête selon l'une des revendications précédentes, **caractérisé en ce que** le gilet de sécurité (8) est accolé à une plaque rigide (14) facilitant l'introduction du gilet de sécurité (8) dans le logement (9) du coussin (3) de l'appui-tête (2) au travers de l'ouverture (10) de ce coussin et pouvant être séparée du gilet de sécurité (8) lorsque ce dernier est extrait de l'appui-tête (2).

5. Appui-tête selon l'une quelconque des revendications précédentes, **caractérisé en ce que** le moyen de préhension (11) est solidaire du gilet de sécurité (8).

6. Appui-tête selon la revendication 4, **caractérisé en ce que** le moyen de préhension (11) est solidaire de la laque rigide (14).

7. Appui-tête selon l'une des revendications précédentes, **caractérisé en ce que** le gilet de sécurité (8) est repliable à plat en poche ou est logé à plat dans une pochette (12).

8. Appui-tête selon l'une des revendications précédentes, **caractérisé en ce que** l'ouverture (10) est réalisée à une extrémité inférieure du coussin (3) située entre la face avant d'appui-tête et la face arrière du coussin (3).

9. Véhicule, tel qu'un véhicule automobile, **caractérisé en ce qu'**il comprend un ou plusieurs sièges dont chaque dossier (1) est équipé d'un appui-tête (2) conforme aux revendications 1 à 8.

## Claims

1. Headrest (2) of a seat backrest (1) in a vehicle, such as a motor car, comprising a device for storing a safety vest, said headrest (2) comprising a cushion (3) having an opening (10) through which the safety vest (8), stored in a housing (9) formed in the padding (7) of the cushion (3) of the headrest (2) and in which the safety vest (8) can be introduced in order to store it in the housing (9) in the cushion (3) of the headrest (2), can be extracted manually, **characterised in that** the storage device comprises a gripping means (11), such as handle or tongue, projecting from the opening (10) in the cushion (3) of the headrest (2), said gripping means making it possible to extract the safety vest (8) from the housing (9) in the headrest (2) when a traction is exerted on the gripping means.

2. Headrest according to claim 1, **characterised in that** the housing (9) in the cushion (3) of the headrest (2) is formed so as to enable the safety vest (8) to be stored folded flat in the headrest (2).

3. Headrest according to claim 1 or 2, **characterised in that** the opening (10) in the cushion (3) of the headrest (2) is in the general shape of a slot.

4. Headrest according to one of the preceding claims, **characterised in that** the safety vest (8) is pressed up against a rigid plate (14) facilitating the insertion of the safety vest (8) in the housing (9) in the cushion (3) of the headrest (2) through the opening (10) in this cushion and able to be separated from the safety vest (8) when the latter is extracted from the headrest (2).

5. Headrest according to any one of the preceding claims, **characterised in that** the gripping means (11) is secured to the safety vest (8).

6. Headrest according to claim 4, **characterised in that** the gripping means (11) is secured to the rigid plate (14).

7. Headrest according to one of the preceding claims, **characterised in that** the safety vest (8) can be folded flat in a pouch or is housed flat in a bag (12).

8. Headrest according to one of the preceding claims, **characterised in that** the opening (10) is produced at a bottom end of the cushion (3) situated between the front headrest face and the rear face of the cushion (3).

9. Vehicle, such as a motor car, **characterised in that** it comprises one or more seats, each backrest (1) of which is equipped with a headrest (2) in accordance with claims 1 to 8.

## Patentansprüche

1. Kopfstütze (2) einer Rückenlehne **(1)** eines Fahrzeugsitzes, wie jener eines Kraftfahrzeugs, umfassend eine Ablagevorrichtung für eine Sicherheitsweste, wobei die besagte Kopfstütze (2) ein Kissen (3) umfassend eine Öffnung (10) enthält, durch die die Sicherheitsweste (8) von Hand entnommen werden kann, die in einem Fach (9) verstaut ist, das in der Auspolsterung (7) des Kissens (3) der Kopfstütze (2) gebildet wird, und in das die Sicherheitsweste (8) eingeführt werden kann, um sie im Fach (9) des Kissens (3) der Kopfstütze (2) zu verstauen, **dadurch gekennzeichnet, dass** die Ablagevorrichtung eine Greifvorrichtung (11) in der Art eines Griffes oder einer Zunge umfasst, die aus der Öffnung (10) des Kissens (3) der Kopfstütze (2) übersteht, und die Sicherheitsweste (8) mit der besagten Greifvorrichtung aus dem Fach (9) der Kopfstütze (2) gezogen werden kann, wenn man an der Greifvorrichtung zieht.

2. Kopfstütze nach Anspruch 1, **dadurch gekennzeichnet, dass** das Fach (9) des Kissens (3) der Kopfstütze (2) so ausgeformt ist, dass die Sicherheitsweste (8) flach gefaltet in der Kopfstütze (2) verstaut werden kann.

3. Kopfstütze nach den Ansprüchen 1 oder 2, **dadurch gekennzeichnet, dass** die Öffnung (10) des Kissens (3) der Kopfstütze (2) allgemein eine Schlitzform aufweist.

4. Kopfstütze nach irgendeinem der vorherigen Ansprüche, **dadurch gekennzeichnet, dass** die Sicherheitsweste (8) an einer steifen Platte (14) angefügt ist, die das Einführen der Sicherheitsweste (8) durch die Öffnung (10) dieses Kissens ins Fach (9) des Kissens (3) der Kopfstütze (2) erleichtert, und die von der Sicherheitsweste (8) getrennt werden kann, sobald letztere aus der Kopfstütze (2) gezogen worden ist.

5. Kopfstütze nach irgendeinem der vorherigen Ansprüche, **dadurch gekennzeichnet, dass** die Greifvorrichtung (11) fest mit der Sicherheitsweste (8) verbunden ist.

6. Kopfstütze nach Anspruch 4, **dadurch gekennzeichnet, dass** die Greifvorrichtung (11) fest mit der steifen Platte (14) verbunden ist.

7. Kopfstütze nach einem der vorherigen Ansprüche, **dadurch gekennzeichnet, dass** die Sicherheitsweste (8) wieder flach in Taschenform gefaltet werden kann, oder flach in einer Hülle (12) verstaut wird.

8. Kopfstütze nach einem der vorherigen Ansprüche, **dadurch gekennzeichnet, dass** die Öffnung (10) an einem unteren Ende des Kissens (3) ausgeführt ist, das sich zwischen der Vorderseite der Kopfstützte und der Rückseite des Kissens (3) befindet.

9. Fahrzeug in der Art eines Kraftfahrzeugs, **dadurch gekennzeichnet, dass** es einen oder mehrere Sitze umfasst, von denen jede Rückenlehne (1) mit einer Kopfstütze (2) nach den Ansprüchen 1 bis 8 ausgestattet ist.
